# EUROPÄISCHE PATENTANMELDUNG

(11) **EP 4 024 773 A1**
(43) Veröffentlichungstag der Anmeldung: **06.07.2022**
(21) Anmeldenummer: 20217497.5
(22) Anmeldetag: 29.12.2020
(51) Int. Cl.: H04L 12/403

(54) **TEILNEHMER FÜR EIN KOMMUNIKATIONSBUSSYSTEM**

(71) Anmelder: Elmos Semiconductor SE, 44227 Dortmund (DE)
(72) Erfinder: Fronen, Rob, 40878 Ratingen (DE); Parkalian, Nina, 50679 Köln (DE); Hauschild, Ralf, 42699 Solingen (DE)
(74) Vertreter: dompatent von Kreisler Selting Werner - Partnerschaft von Patent- und Rechtsanwälten mbB

(57) **Zusammenfassung**

Der Teilnehmer (10) für ein Kommunikationsbussystem mit einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels differenzieller elektrischer Signale, wobei die Zweidrahtleitung eine erste Leitung und eine zweite Leitung aufweist und jeder Zweidrahtleitungsabschnitt einen Abschnitt der ersten Leitung und einen Abschnitt der zweiten Leitung umfasst, weist einen Empfänger (24) und einen Sender (26) auf, an die jeweils Zweidrahtleitungsabschnitte (20, 22) angeschlossen sind. Am Eingang befindet sich ein Abschlusswiderstand (30), der in Reihe mit einem Testschalter (32) liegt. Zwischen dem Empfänger (24) und dem Sender (26) befinden sich zwei Überbrückungswiderstände (34, 36).

## Beschreibung

Die Erfindung betrifft einen Teilnehmer für ein Kommunikationsbussystem mit einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels differenzieller elektrischer Signale, wobei die Zweidrahtleitung eine erste Leitung und eine zweite Leitung aufweist und jeder Zweidrahtleitungsabschnitt einen Abschnitt der ersten Leitung und einen Abschnitt der zweiten Leitung aufweist. Die Erfindung betrifft also einen Teilnehmer eines Daisy-Chain-Bussystems.

Derartige Kommunikationsbussysteme werden in zunehmendem Maße für Innenbeleuchtungsanwendungen bei Fahrzeugen eingesetzt. Sie zeichnen sich durch hohe Übertragungsraten und einen einfachen Aufbau aus. Grundsätzlich problematisch bei Daisy-Chain-Bussystemen ist allerdings, dass der Ausfall eines Teilnehmers dazu führen kann, dass die vom Busmaster aus gesehen hinter dem ausgefallenen Teilnehmer angeordneten Teilnehmer nicht mehr angesteuert werden können.

Zur Lösung dieser Problematik ist es aus dem Stand der Technik bekannt, in dem Datenbus die Anschlüsse eines Teilnehmers überbrückende Schalter anzuordnen (siehe beispielsweise EP-A-3 264 680, WO-A-2009/040015, WO-A-2017/125440, WO-A-2018/114937 und US-A-2007/0025240). Allerdings erfordert wiederum die Ansteuerung dieser Schalter einen erhöhten Aufwand innerhalb jedes Teilnehmers und auch auf Seiten des Busmasters.

Aufgabe der Erfindung ist es, einen Teilnehmer für ein Kommunikationsbussystem nach dem Daisy-Chain-Konzept zu schaffen, der hinsichtlich seines Aufbaus zwecks Weiterleitung der Datenkommunikation bei einem Ausfall des Teilnehmers vereinfacht ist. Des Weiteren ist es Aufgabe der Erfindung, ein Verfahren zur Datenkommunikation in einem Kommunikationsbussystem nach dem Daisy-Chain-Konzept zu schaffen, in dem erfindungsgemäße Teilnehmer eingesetzt werden.

Zur Lösung dieser Aufgabe schafft die Erfindung einen Teilnehmer für ein Kommunikationsbussystem mit einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels differenzieller elektrischer Signale, wobei die Zweidrahtleitung eine erste Leitung und eine zweite Leitung aufweist und jeder Zweidrahtleitungsabschnitt einen Abschnitt der ersten Leitung und einen Abschnitt der zweiten Leitung umfasst, mit
- einem Empfänger mit zwei Eingangsanschlüssen, von denen jeder mit einer anderen der beiden Leitungen eines ersten Zweidrahtleitungsabschnitts verbindbar ist,
- einem Sender mit zwei Ausgangsanschlüssen, von denen jeder mit einem anderen der beiden Leitungen eines zweiten Zweidrahtleitungsabschnitts verbindbar ist,
- einer Datenverarbeitungseinheit,
- einer mit den beiden Leitungen des ersten Zweidrahtleitungsabschnitts verbundenen und damit parallel zu den Eingangsanschlüssen des Empfängers angeordneten Serienschaltung aus einem von der Datenverarbeitungseinheit wahlweise in einen geschlossenen oder in einen offenen Schaltzustand überführbaren Testschalter und einem Abschlusswiderstand oder einer Parallelschaltung aus einem von der Datenverarbeitungseinheit wahlweise in einen geschlossenen oder in einen offenen Schaltzustand überführbaren Testschalter und einem Abschlusswiderstand,
- einem ersten Überbrückungswiderstand zwischen demjenigen Eingangsanschluss des Empfängers, der mit der ersten Leitung des ersten Zweidrahtleitungsabschnitts zu verbinden ist, und demjenigen Ausgangsanschluss des Senders, der mit der ersten Leitung des zweiten Zweidrahtleitungsabschnitts zu verbinden ist, und
- einem zweiten Überbrückungswiderstand zwischen demjenigen Eingangsanschluss des Empfängers, der mit der zweiten Leitung des ersten Zweidrahtleitungsabschnitts zu verbinden ist, und demjenigen Ausgangsanschluss des Senders, der mit der zweiten Leitung des zweiten Zweidrahtleitungsabschnitts zu verbinden ist.

Wesentliche Merkmale des erfindungsgemäßen Teilnehmers sind zwei Überbrückungswiderstände, die neben dem an sich bekannten Abschlusswiderstand des Teilnehmers vorgesehen sind. Der Abschlusswiderstand des erfindungsgemäßen Teilnehmers liegt parallel zu den beiden Anschlüssen des Empfängers, wobei dieser Abschlusswiderstand in Serie mit einem Testschalter verschaltet ist, bei dem es sich typischerweise um einen Transistor (z.B. FET, MOSFET) handelt. Testschalter und Abschlusswiderstand liegen also parallel zu den Eingangsanschlüssen des Teilnehmers.

Der erfindungsgemäße Teilnehmer weist einen Empfänger und einen Sender auf. Der Empfänger ist an die beiden zum Teilnehmer führenden Zweidrahtleitungsabschnitte verbunden. Sein Ausgangssignal wird der Datenverarbeitungseinheit des Teilnehmers zugeführt, die applikationsabhängig eine Hardware steuert, bei der es sich um eine Fahrzeugkomponente handelt. Die Erfindung ist nämlich vorzugsweise für die Anwendung in einem Fahrzeug gedacht, und zwar für lichttechnische Anwendungen wie die Innenraumbeleuchtung, Ambient Light Anwendungen o.dgl.

Der erfindungsgemäße Teilnehmer weist des Weiteren einen Sender auf, der von der Datenverarbeitungseinheit mit Signalen versorgt wird und seinerseits an die beiden zum nächsten Teilnehmer führenden Zweidrahtleitungsabschnitten angeschlossen ist.

Erfindungsgemäß weist der Teilnehmer zwei weitere Widerstände, nämlich zwei Überbrückungswiderstände auf, von denen der eine zwischen die beiden zum Teilnehmer führenden und vom Teilnehmer wegführenden Zweidrahtleitungsabschnitte der einen Leitung und der andere Überbrückungswiderstand in die beiden ebenfalls zum Teilnehmer führenden und von diesem zum nächsten Teilnehmer führenden Zweidrahtleitungsabschnitte der anderen Leitung geschaltet ist.

Der Schaltzustand des Testschalters signalisiert, ob der Teilnehmer defekt oder intakt ist. Typischerweise ist der Testschalter geschlossen, wenn der Teilnehmer intakt ist, seine Funktionstüchtigkeit also gegeben ist. Der Transistor ist z.B. (ohne Ansteuerung) sperrend (Transistor vom Anreichungstyp) und wird bei erfolgreich durchgeführtem Selbsttest durch ein Ansteuersignal des Microcontrollers, wie er bei sogenannten Smart Clients vorhanden ist, in den leitenden Zustand überführt. Damit liegt eine Serienschaltung aus Testschalter und Abschlusswiderstand vor. Bei einer Parallelschaltung aus beidem wäre der Testschalter dann, wenn der Teilnehmer intakt ist, offen.

Bei geöffnetem Testschalter, d.h. bei einem nicht funktionstüchtigen Teilnehmer, wird seitens des Empfängers automatisch erkannt, dass das Eingangssignal auf Grund des nicht zugeschalteten Abschlusswiderstandes in einem Spannungsbereich außerhalb des Sollspannungsbereichs liegt. Die Signale auf den Leitungen werden dann über die Überbrückungswiderstände an dem besagten Teilnehmer vorbei zum Empfänger des nächsten Teilnehmers übertragen. Auf diese Art und Weise wird also der nicht funktionstüchtige Teilnehmer "überbrückt", ohne dass dazu in die Busleitungen elektronische Schalter o.dgl. verbaut werden müssen. Der typischerweise am Eingang eines Teilnehmers vorhandene Abschlusswiderstand wird also dazu genutzt, um den Teilnehmer, dessen Ausgang mit dem Eingang des besagten Teilnehmers verbunden ist, zu signalisieren, ob der besagte Teilnehmer defekt ist oder nicht. Das hat Vorteile bei der Kommunikation und Autoadressierung, worauf später noch eingegangen wird.

Die Dimensionierung des Abschlusswiderstandes sowie der beiden Überbrückungswiderstände des erfindungsgemäßen Teilnehmers ist so zu wählen, dass jeder funktionstüchtige Teilnehmer den typischerweise erforderlichen Leitungsabschlusswiderstand bildet und jeder nicht funktionstüchtige Teilnehmer letztendlich für funktionstüchtige Teilnehmer "nicht sichtbar" ist. Aus diesen Bedingungen ergibt sich z.B. für einen insbesondere bei LVDS-Bussystemen vorgegebenen Abschlusswiderstand von 100 Ohm, dass jeder der drei zuvor genannten Widerstände etwa 140 Ohm betragen sollte.

Die Erfindung ist insbesondere geeignet zur Anwendung bei einem LVDS-Bussystem (Low Voltage Differential Signal). Hierbei erzeugt der Busmaster durch einen differenziellen Strompuls ein differenzielles elektrisches Signal auf dem Zweidraht-Kommunikationsbus, das am Eingang des mit dem Busmaster verbundenen Teilnehmers über einen Abschlusswiderstand definierter Größe in ein differenzielles Spannungssignal umgesetzt wird. Am Ausgang des Teilnehmers erzeugt dieser wiederum ein differenzielles Stromsignal, wodurch letztendlich Daten, die durch die differenziellen Signale repräsentiert werden. von Teilnehmer zu Teilnehmer weitergegeben werden bzw. von demjenigen Teilnehmer verarbeitet werden, für den die Daten bestimmt sind.

LVDS-Bussysteme können auch beispielsweise in einem Fahrzeug für die Innenraumbeleuchtung oder für die Ambient Light Anwendung eingesetzt werden. Die Hardware für ein derartiges System ist kostengünstig und einfach konzipiert, was insbesondere für Großserienanwendungen von Vorteil ist, was bei Automotive wünschenswert ist.

In zweckmäßiger Weiterbildung der Erfindung kann vorgesehen sein,
- dass die Datenverarbeitungseinheit zur Durchführung eines Selbsttests des Teilnehmers auf Funktionstüchtigkeit ausgelegt ist und den Testschalter dann, wenn die Funktion des Teilnehmers gegeben ist, in den einen Schaltzustand überführt und/oder hält, und ansonsten in den anderen Schaltzustand überführt und/oder hält, und
- dass ein differenzielles elektrisches Signal zwischen den beiden Leitungen desjenigen Zweidrahtleitungsabschnitts, der mit dem Empfänger eines nicht funktionstüchtigen Teilnehmers verbunden ist, über die Überbrückungswiderstände dieses nicht funktionstüchtigen Teilnehmers zu dem Empfänger desjenigen Teilnehmers weiterleitbar ist, dessen Eingang mit den Leitungen desjenigen Zweidrahtleitungsabschnitts verbunden ist, an den der Sender des nicht funktionstüchtigen Teilnehmers angeschlossen ist.

Ein weiterer Aspekt der Erfindung betrifft ein Verfahren zur Datenkommunikation in einem Kommunikationsbussystem, das versehen ist mit
- einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels differenzieller elektrischer Signale, wobei die Zweidrahtleitung eine erste Leitung und eine zweite Leitung aufweist und jeder Zweidrahtleitungsabschnitt einen Abschnitt der ersten Leitung und Abschnitt der zweiten Leitung umfasst,
   und
- mehreren erfindungsgemäßen Teilnehmern, wie oben beschrieben,
wobei bei dem Verfahren
- der Sender eines nicht funktionstüchtigen Teilnehmers inaktiv geschaltet ist und ein solcher Sender kein differenzielles elektrisches Ausgangssignal ausgibt,
- der Sender des zum nicht funktionstüchtigen Teilnehmer in Richtung zum Busmaster hin und damit zum in Richtung stromauf der Reihenschaltung betrachtet nächstgelegenen funktionstüchtigen Teilnehmer über die Überbrückungswiderstände des nicht funktionstüchtigen Teilnehmers mit dem Empfänger des zum nicht funktionstüchtigen Teilnehmer in Richtung vom Busmaster weg und damit zum in Richtung stromab der Reihenschaltung betrachtet nächstgelegenen funktionstüchtigen Teilnehmer oder umgekehrt kommuniziert.

Der erfindungsgemäße Teilnehmer lässt sich unter Ergänzung seiner Hardware darüber hinaus vorteilhafterweise einsetzen für die automatische Adressvergabe im Daisy-Chain-Kommunikationsbussystem. Bei dieser Variante der Erfindung schafft diese einen Teilnehmer gemäß vorstehend genannter Art, der zusätzlich einen parallel zu den Eingangsanschlüssen des Empfängers vorgesehenen Adressierschalter (typischerweise ausgeführt als elektrischer Schalter in Form eines Transistors wie z.B. FET oder MOSFET, der ohne Ansteuerung z.B. selbstsperrend ist) aufweist, der ebenfalls von der Datenverarbeitungseinheit gesteuert wird. Der Adressierschalter ist geöffnet, solange der Teilnehmer noch keine Adresse erhalten hat, und wird geschlossen, wenn er eine Adresse erhalten hat. Nach Abschluss der Adressvergabe für sämtliche zu adressierenden Teilnehmer des Kommunikationsbussystems werden sämtliche während der Adressvergabe geschlossene Adressierschalter wieder geöffnet, wobei anzumerken ist, dass der Adressierschalter eines vor Beginn der Adressvergabe als nicht funktionstüchtig erkannte Teilnehmer seinen Adressierschalter während der gesamten Adressvergabe offen hält (wie er auch seinen Testschalter typischerweise offen hält, um zu signalisieren, dass er defekt ist).

Anders ausgedrückt also veranlasst die Datenverarbeitungseinheit das Schließen des Testschalters eines Teilnehmers, dessen Funktionstüchtigkeit gegeben ist und im Rahmen des bei der Initialisierung des Kommunikationsbussystems typischerweise durchgeführten Selbsttests erkannt wurde.

Insoweit ist es also zweckmäßig,
- dass die Datenverarbeitungseinheit zur Durchführung eines Selbsttests des Teilnehmers auf Funktionstüchtigkeit ausgelegt ist und den Testschalter dann, wenn die Funktion des Teilnehmers gegeben ist, in den einen Schaltzustand überführt und/oder hält, und ansonsten in den anderen Schaltzustand überführt und/oder hält,
   dass die Datenverarbeitungseinheit bei gegebener Funktionstüchtigkeit des Teilnehmers und bei noch nicht an den Teilnehmer vergebener Adresse den Adressierschalter zum Verbleib in dessen offenen Zustand veranlasst sowie die Adressierstromquelle des Teilnehmers zum Einspeisen eines Adressierstroms ansteuert und den Adressierschalter erst nach einer durch den Busmaster erfolgten Vergabe einer Adresse an den Teilnehmer zum Schließen veranlasst sowie nach Abschluss der Vergabe von Adressen an sämtliche funktionstüchtigen Teilnehmer zum Überführen und Verbleiben in den offenen Zustand veranlasst und
- dass die Datenverarbeitungseinheit bei nicht gegebener Funktionstüchtigkeit des Teilnehmers in der Adressvergabephase die Adressierstromquelle nicht ansteuert und den Adressierschalter zum Verbleib in dem offenen Zustand veranlasst.

Ferner wird mit der Erfindung gemäß vorstehender Variante, d.h. mit Adressierschalter, auch ein Verfahren zur Vergabe von Adressen an die funktionstüchtigen Teilnehmer eines Kommunikationsbussystems der vorstehend genannten Art vorgeschlagen, wobei dem Verfahren
- auf einen Befehl des Busmasters hin jeder Teilnehmer einen Selbsttest auf Funktionstüchtigkeit durchführt und die Datenverarbeitungseinheit jedes Teilnehmers dessen Testschalter nur dann schließt, wenn die Funktion des Teilnehmers gegeben ist,
- vor Vergabe von Adressen an die funktionstüchtigen Teilnehmer der Adressierschalter jedes funktionstüchtigen Teilnehmers offen ist,
- die Vergabe von Adressen an die funktionstüchtigen Teilnehmer in mehreren Adressvergabezyklen erfolgt, wobei pro Adressvergabezyklus ein einziger der noch nicht adressierten funktionstüchtigen Teilnehmer identifiziert und diesem Teilnehmer von dem Busmaster eine Adresse zugeordnet wird,
- in dem ersten Adressvergabezyklus
   - von den Adressierstromquellen der noch nicht adressierten, funktionstüchtigen Teilnehmern ein bei allen betreffenden Teilnehmern im Wesentlichen gleich großer (bis zu +/- 20 % oder bis zu +/- 10 % Abweichung) sequentiell Adressierstrom in eine der Leitungen der Zweidrahtleitung eingespeist wird,
   - der in der Reihenschaltung von Teilnehmern letzte der noch nicht adressierten, funktionstüchtigen Teilnehmer, der eventuell neben einem stromab des Kommunikationsbusses und damit vom Busmaster weiter entfernt liegenden, nicht funktionstüchtigen Teilnehmer angeordnet ist, durch seinen Detektor als einziger Teilnehmer einen Spannungsabfall detektiert, der in einem ersten (oder in einem zweiten) Detektionsbereich liegt, der diesen Teilnehmer als in der Reihenschaltung von Teilnehmer letzten, noch nicht adressierten, funktionstüchtigen Teilnehmer identifiziert,
   - dieser Teilnehmer sowie sämtliche anderen, noch nicht adressierten, funktionstüchtigen Teilnehmer ihre Adressierstromeinspeisung beenden,
   - der Busmaster über den Kommunikationsbus Adressdaten versendet, die der in diesem Adressvergabezyklus identifizierte Teilnehmer als seine Adresse entgegennimmt, und
   - der so adressierte Teilnehmer seinen Adressierschalter schließt, bis sämtliche noch nicht adressierten, funktionstüchtigen Teilnehmer eine Adresse erhalten haben,
- in jedem der bis zum Ende der Adressvergabe folgenden Adressvergabezyklen
   - von den Adressierstromquellen der noch nicht adressierten, funktionstüchtigen Teilnehmer sequentiell Adressierstrom in eine der Leitungen der Zweidrahtleitung eingespeist wird,
   - der in der Reihenschaltung von Teilnehmern letzte der noch nicht adressierten, funktionstüchtigen Teilnehmer, der eventuell neben einem stromab des Kommunikationsbusses und damit vom Busmaster weiter entfernt liegenden, nicht funktionstüchtigen Teilnehmer angeordnet ist, durch seinen Detektor als einziger Teilnehmer einen Spannungsabfall detektiert, der in einem zweiten, dritten oder vierten Detektionsbereich liegt, der diesen Teilnehmer als in der Reihenschaltung von Teilnehmern letzten, noch nicht adressierten, funktionstüchtigen Teilnehmer identifiziert,
   - dieser Teilnehmer sowie sämtliche anderen, noch nicht adressierten, funktionstüchtigen Teilnehmer ihre Adressierstromeinspeisung beenden,
   - der Busmaster über den Kommunikationsbus Adressdaten versendet, die der in dem betreffenden Adressvergabezyklus identifizierte Teilnehmer als seine Adresse entgegennimmt,
   - der so adressierte Teilnehmer seinen Adressierschalter schließt, bis sämtliche noch nicht adressierten, funktionstüchtigen Teilnehmer eine Adresse erhalten haben, und
- dann, wenn sämtliche funktionstüchtigen Teilnehmer mit einer Adresse versehen sind, die Adressierschalter sämtlicher funktionstüchtiger Teilnehmer geöffnet werden und die Adressierschalter der nicht funktionstüchtigen Teilnehmer geöffnet bleiben.

In der Anfangsphase führt also jeder Teilnehmer einen Selbsttest durch und signalisiert durch seinen z.B. nicht geschlossenen Testschalter, dass er defekt ist. Bei einer Serienschaltung aus Testschalter und Abschlusswiderstand weist er dann keinen definierten Abschlusswiderstand auf. Nach Abschluss dieser Phase erkennt also jeder Teilnehmer, ob er eventuell der letzte Teilnehmer in der Reihenschaltung ist, oder ob er eventuell stromauf eines defekten Nachbarteilnehmers, d.h. vom Busmaster aus betrachtet vor einem defekten Teilnehmer angeordnet ist oder ob er eventuell defekt ist. Während der anschließenden Adressvergabephase und danach bei der normalen Buskommunikation sind diese Informationen von Nutzen.

Bei der anschließenden Adressvergabe speisen die funktionstüchtigen, noch nicht adressierten Teilnehmer sequentiell und in der Reihenfolge stromab vom Busmaster mit dem zum Busmaster nächstliegenden Teilnehmer beginnend und durch den Busmaster ausgelöst kurzfristig einen Adressierstrom ein. Der Busmaster beginnt also mit der Einspeisung des Adressierstroms, der vom ersten Teilnehmer empfangen wird, um dann von diesem ersten Teilnehmer erneut erzeugt zu werden, und zwar für den zweiten Teilnehmer, der den Adressierstrom wiederum empfängt. Der Adressierstrom ist insoweit als Hilfsmittel zu sehen, um in jedem Adressierzyklus denjenigen Teilnehmer zu identifizieren, der als nächstes mit einer Adresse versehen wird. Jeder Teilnehmer detektiert beim Einspeisen des Adressierstroms in den Zweidraht-Kommunikationsbus über einen Detektor eine Spannung an seinem Ausgang. Diese ist unter anderem dadurch bestimmt, welcher Teilnehmer auf diesen Teilnehmer folgt (eventuell ein defekter Teilnehmer, ein bereits adressierter Teilnehmer oder aber die offene Leitung, da der betreffende Teilnehmer der letzte Teilnehmer ist). Ist die Spannung oberhalb einer oberen Schwelle, dann "sieht" der Ausgang des betreffenden Teilnehmers eine "offene" Leitung, was bedeutet, dass der besagte Teilnehmer der letzte Teilnehmer der Reihenschaltung ist. Die Autoadressierung erfolgt von "hinten nach vorne", also mit dem stromab des Busmasters am weitesten von diesem angeordneten Teilnehmer beginnend und stromaufwärts bis zum mit dem Busmaster verbundenen ersten Teilnehmer. Ein funktionstüchtiger Teilnehmer, der sich vor einem defekten Teilnehmer und damit stromauf eines defekten Teilnehmers befindet, detektiert an seinem Ausgang eine Spannung, die durch die Reihenschaltung aus mindestens zwei Überbrückungswiderständen (je nachdem, wie viele defekte Teilnehmer in der Reihenschaltung aufeinanderfolgend vorhanden sind, was im Regelfall nur ein Teilnehmer sein wird) und einem Abschlusswiderstand (nämlich dem Abschlusswiderstand des auf den letzten defekten Teilnehmer folgenden intakten Teilnehmers), so dass jeder dieser funktionstüchtigen Teilnehmer einen Spannungsabfall misst, der kleiner als die obere Schwelle ist. Jeder funktionstüchtige Teilnehmer, der in der Reihenschaltung vor einem benachbarten funktionstüchtigen Teilnehmer angeordnet ist, detektiert eine durch den Abschlusswiderstand bestimmte Spannung, die zwischen der unteren Schwelle und der oberen Schwelle liegt. Andere Spannungsabfall-Szenarien als die zuvor genannten existieren in dem ersten Adressvergabezyklus nicht. Wenn nun der Busmaster die zu vergebende erste Adresse an den ersten Teilnehmer sendet, so übernimmt dieser erste Teilnehmer die Adresse nicht sondern gibt sie an den nächsten Teilnehmer weiter usw., bis letztendlich der letzte Teilnehmer als einziger Teilnehmer diese Adresse übernimmt, weil er nämlich der einzige Teilnehmer ist, der einen Spannungsabfall von oberhalb der Schwelle misst (und kein Teilnehmer an seinem Ausgang einen Kurzschluss misst, was aber nicht mehr ab dem zweiten Zyklus gelten muss). Der letzte Teilnehmer schließt seinen Adressierschalter. Im nächsten Adressvergabezyklus ist der vor diesem Teilnehmer liegende funktionstüchtige Teilnehmer der einzige Teilnehmer ist, der an seinem Ausgang einen Kurzschluss misst, während sämtliche andere Teilnehmer einen Spannungsabfall messen, der oberhalb desjenigen eines Kurzschlusses und unterhalb desjenigen der offenen Leitung liegt. Ist im Laufe der Adressvergabezyklen ein vor einem defekten Teilnehmer angeordneter intakter Teilnehmer der in dem betreffenden Zyklus zu adressierende Teilnehmer, so erfüllt nur dieser Teilnehmer auf Grund seines gemessenen Ausgangsspannungsabfalls die Bedingung für den zu adressierenden Teilnehmer, da kein Teilnehmer einen Kurzschluss oder eine offene Leitung misst. Der Busmaster erkennt das Ende der Adressiervergabephase dadurch, dass nach dem letzten Adressvergabezyklus der mit ihm verbundene Teilnehmer seinen Adressierschalter geschlossen hat, womit auf Grund der Adressvergabevorgabe "von hinten nach vorne" kein Teilnehmer mehr existieren kann, der noch adressiert werden müsste.

Durch dieses Szenario lässt sich also schrittweise jeder funktionstüchtige Teilnehmer adressieren. Letztendlich verhält sich auch der Busmaster wie jeder Teilnehmer. Denn im letzten Adressvergabezyklus erkennt der Busmaster, dass der mit ihm direkt verbundene erste Teilnehmer der Reihenschaltung derjenige ist, der nun adressiert wird. Sendet der Busmaster danach einen weiteren Adressierstrompuls, so detektiert er an seinem Ausgang wegen des geschlossenen Adressierschalters des ersten Teilnehmers einen Kurzschluss, was ihm signalisiert, dass nun sämtliche zu adressierenden Teilnehmer adressiert sind. Die Erfindung betrifft ferner ein Kommunikationsbussystem mit Datenübertragung durch differenzielle elektrische Signale, mit
- einem Busmaster,
- einer mehrere Zweidrahtleitungsabschnitte aufweisenden Zweidrahtleitung als differenzieller Kommunikationsbus zur Verbindung mehrerer Teilnehmer in Reihenschaltung mit dem Busmaster und
- mehreren Teilnehmern, wie oben beschrieben.

Die Erfindung wird nachfolgend anhand eines Ausführungsbeispiels sowie unter Bezugnahme auf die Zeichnung näher erläutert. Im Einzelnen zeigen dabei:
- Fig. 1: eine Blockschaltbilddarstellung der für die Erfindung wesentlichen Komponenten eines Teilnehmers gemäß einem ersten Ausführungsbeispiel der Erfindung,
- Fig. 2: eine Erweiterung der Konzeption des Teilnehmers gemäß Fig. 1 zur Verwendung des Teilnehmers in einem Daisy-Chain-Kommunikationsbussystem mit automatischer Adressvergabe und
- Fign. 3 bis 9: die verschiedenen Stadien mit entsprechenden Schaltzuständen der Test- und Adressierschalter mehrerer Teilnehmer eines Daisy-ChainKommunikationsbussystems in der Adressierphase und unter der Annahme, dass mindestens einer der Teilnehmer defekt ist.

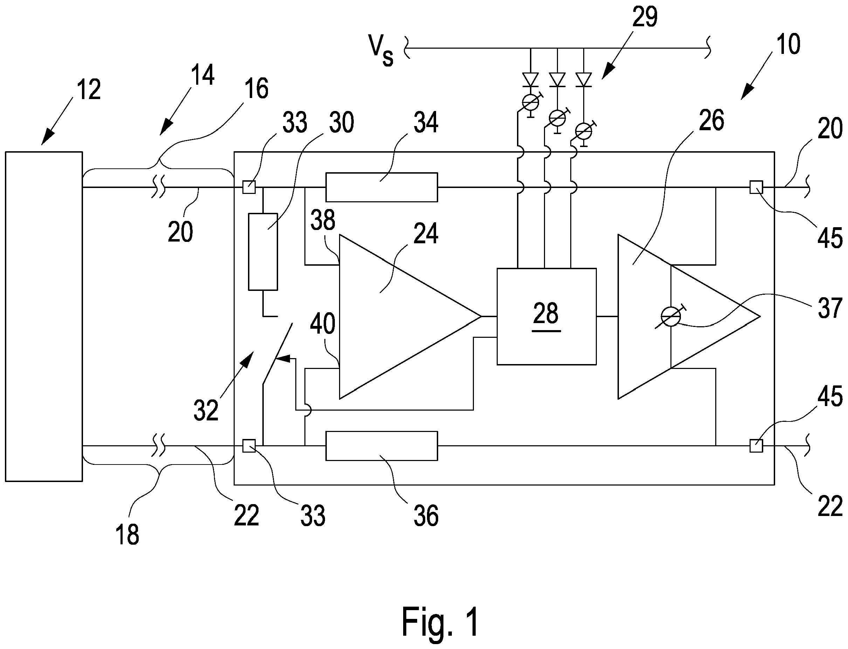

In Fig. 1 ist ein Ausführungsbeispiel eines erfindungsgemäßen Teilnehmers gezeigt, der als einer von einer Vielzahl von beispielsweise bis zu mehreren hundert Teilnehmern in einem Daisy-Chain-Bussystem angeordnet ist. In Fig. 1 ist nur einer dieser Teilnehmer 10 gezeigt und darüber hinaus noch der Busmaster 12. Der Zweidraht-Kommunikationsbus 14 weist eine erste Leitung 16 sowie eine zweite Leitung 18 auf. Einzelne Zweidrahtleitungsabschnitte 20, 22 dieses Zweidraht-Kommunikationsbus 14 führen zu dem Teilnehmer 10 und von diesem weiter zum nächsten Teilnehmer der Reihenschaltung von Teilnehmern usw.

Der Teilnehmer 10 weist einen Empfänger 24 für auf dem Zweidraht-Kommunikationsbus 14 übertragene differenzielle elektrische Signale sowie einen Sender 26 auf, um Stromdifferenzsignale über den Zweidraht-Kommunikationsbus 14 an einen nachfolgenden Teilnehmer zu senden. Die von dem Empfänger 24 eines Teilnehmers 10 empfangenen Signale werden in einer Datenverarbeitungseinheit 28 verarbeitet, sofern sie für die von dem Teilnehmer 10 zu steuernde Applikation bestimmt sind. Bei dieser Applikation handelt es sich in diesem Beispielfall um eine RGB-Leuchtmitteleinheit 29 einer Lichterkette. Die Leuchtmittel werden über steuerbare Stromquellen angesteuert, die zusammen mit den Leuchtmitteln zwischen V_{S} und Masse geschaltet sind.

Die Besonderheit des Teilnehmers 10 ist in der Anordnung von drei Widerständen zu sehen, von denen einer als Abschlusswiderstand 30 in Reihe mit einem Testschalter 32 verschaltet ist und diese Reihenschaltung zwischen den beiden Leitungen 20,22 des Zweidrahtkommunikationsbus 14 am Empfänger 24 und damit zwischen den Eingangsanschlüssen 33 geschaltet ist. Bei den beiden anderen Widerständen handelt es sich um zusätzliche Widerstände, die als erste und zweite Überbrückungswiderstände 34,36 in jeder der beiden Leitungen 16,18 des Zweidraht-Kommunikationsbus 14 verschaltet sind. So ist der erste Überbrückungswiderstand 34 mit dem einen der beiden Zweidrahtleitungsabschnitte 20, der zu dem Teilnehmer 10 führt, sowie mit dem einen der beiden Zweitdrahtleitungsabschnitte 22, der zum nächsten Teilnehmer führt, verbunden, während der zweite Überbrückungswiderstand 36 zwischen dem anderen der beiden Zweidrahtleitungsabschnitte 20, der zum Teilnehmer 10 führt, und dem anderen der beiden Zweidrahtleitungsabschnitte 22, der von dem Teilnehmer 10 zum nächsten Teilnehmer führt, verbunden ist.

Die Datenverarbeitungseinheit 28 führt unter anderem auch einen Selbsttest des Teilnehmers 10 auf Funktionstüchtigkeit durch. Mit Hilfe dieses Selbsttests werden die Funktionen des Teilnehmers 10 überprüft. Wenn die Funktionstüchtigkeit des Teilnehmers 10 festgestellt wird, so wird der bis dahin offene Testschalter 32 geschlossen. Dies gilt für die Initialisierung des Kommunikationsbussystems beispielsweise nach oder bei dem Starten eines Fahrzeugs. Aber auch im Betrieb des Kommunikationsbussystems können derartige Selbsttests durchgeführt werden, so dass dann der geschlossene Testschalter 32 des Teilnehmers geöffnet wird, wenn durch den Selbsttest festgestellt wird, dass die Funktionstüchtigkeit des Teilnehmers 10 nicht mehr gegeben ist.

Der Sender 26 des Teilnehmers 10 weist eine Stromquelle 37 auf, die zur Übertragung von binären Signalen differenzielle Strompulse auf die beiden Zweidrahtleitungsabschnitte 20, 22 gibt, indem Strom aus dem einen Zweidrahtleitungsabschnitt entnommen und in den anderen Zweidrahtleitungsabschnitt eingespeist wird oder in dem umgekehrt Strom in den einen Zweidrahtleitungsabschnitt eingespeist und aus dem anderen entnommen wird, und diese differenziellen Strompulse über diese Zweidrahtleitungsabschnitte 20, 22 an den Empfänger 24 eines benachbarten Teilnehmers sendet, wo sie über dem Abschlusswiderstand 30 in differenzielle Spannungssignale umgesetzt und von einem Komparator (nicht gezeigt) des Senders 24 erkannt werden.

Bei geschlossenem Testschalter 32 werden die zwischen den beiden Eingangsanschlüssen 38,40 des Empfängers 24 anliegenden differenziellen Spannungssignale von der Datenverarbeitungseinheit 28 verarbeitet und/oder an den Sender 26 weitergeleitet. Dies erfolgt nicht, wenn der Testschalter 32 geöffnet ist. Die Weitergabe der differenziellen Spannungssignale vom vor dem Teilnehmer 10 liegenden Teilnehmer erfolgt dann über die Überbrückungswiderstände 34,36 und damit insoweit an dem defekten Teilnehmer 10 vorbei zum nächsten Teilnehmer.

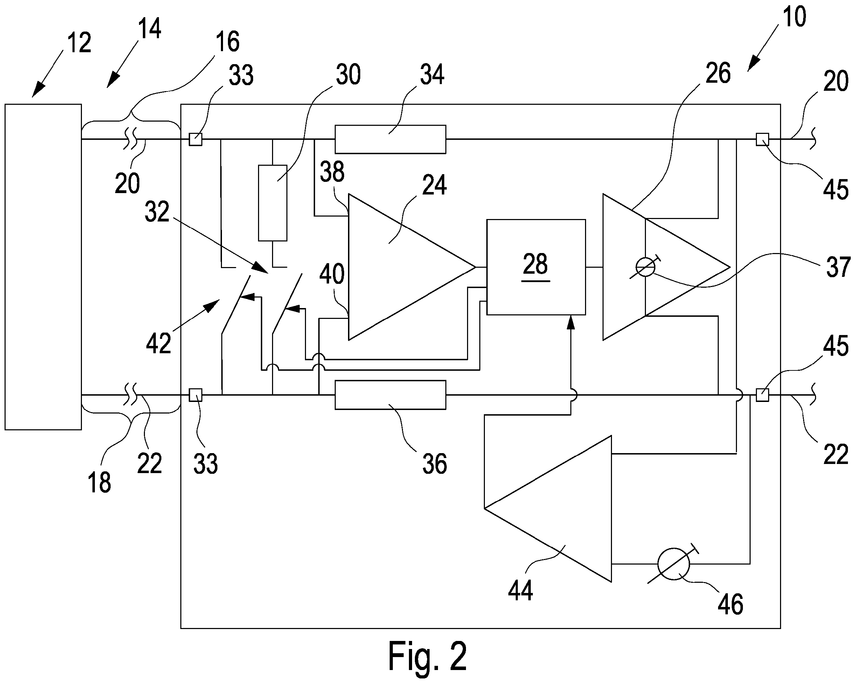

Eine Ergänzung der Hardware des Teilnehmers 10 gemäß Fig. 1 zur automatischen Vergabe von Adressen an die Teilnehmer des Daisy-Chain-Bussystems zeigt Fig. 2. Hierbei ist anzumerken, dass in Fig. 2 (und auch in den nachfolgend noch zu beschreibenden Figuren) die lichttechnische Applikation, die in Fig. 1 gezeigt ist, nicht mehr dargestellt ist.

Die für die automatische Adressvergabe wesentlichen zusätzlichen Komponenten des Teilnehmers 10' der Fig. 2 gegenüber denjenigen des Teilnehmers 10 nach Fig. 1 beziehen sich auf einen Adressierschalter 42, der parallel zur Reihenschaltung aus dem Abschlusswiderstand und dem Testschalter 32 zwischen den beiden zum Teilnehmer 10' führenden Zweidrahtleitungsabschnitten 20,22 geschaltet ist, und auf einen als Komparator ausgeführten Detektor 44, der die Spannungsdifferenz zwischen den Ausgangsanschlüssen 45 des Senders 26 mit verschiedenen Schwellen vergleicht (Fensterdiskriminator), wodurch erkannt wird, in welchem von mehreren Spannungs-(Detektions-)bereichen die Spannungsdifferenz zwischen den Ausgangsanschlüssen 45 des Teilnehmers 10' bei der Adressierstromeinspeisung liegt. Das Ausgangssignal des Detektors 44 wird der Datenverarbeitungseinheit 28 zugeleitet, die den Adressierschalter 42 ansteuert, wie weiter unten noch beschrieben werden wird.

Die Spannungsdifferenz zwischen den Ausgangsanschlüssen 45 des Senders 26 des Teilnehmers 10' wird in der Adressierphase erzeugt durch die Einspeisung eines Adressierstroms einer Adressierstromquelle, bei der es sich vorteilhafterweise um die Stromquelle 37 des Senders 26 handelt, die Adressierstrom in den Zweidraht-Kommunikationsbus 14 oder in zumindest einen der beiden Zweidrahtleitungsabschnitte 20, 22 einspeist oder diesem entnimmt, wie weiter unten noch beschrieben werden wird.

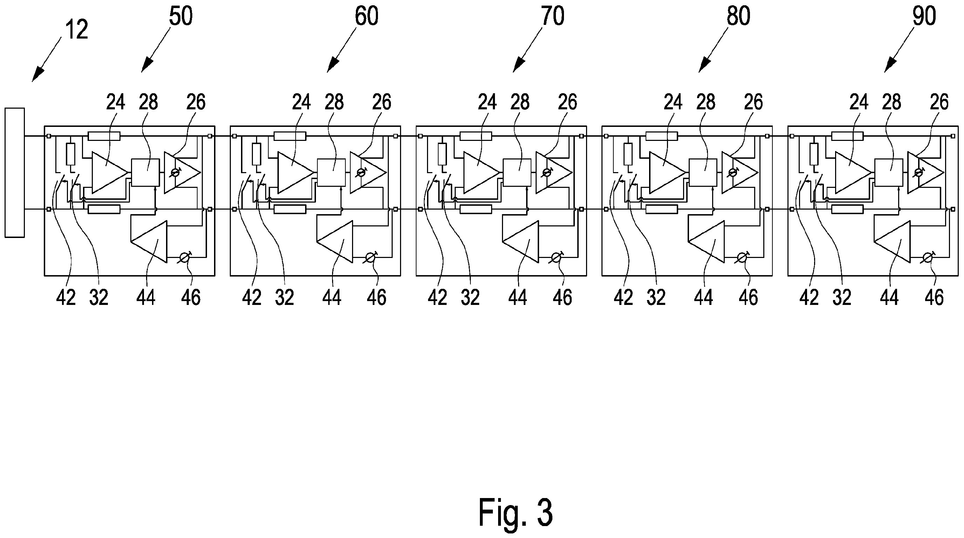

Die wesentliche Aufgabe bei der automatischen Adressvergabe im Kommunikationsbussystem mit einer Vielzahl von Teilnehmers 10' gemäß Fig. 2 sowie dem Busmaster 12 besteht darin, noch nicht adressierte Teilnehmer von bereits adressierten Teilnehmern unterscheiden zu können und ferner defekte Teilnehmer erkennen und von der Vergabe von Adressen ausschließen zu können. Diese Vorgänge sollen nachfolgend anhand der Fign. 3 bis 9 erläutert.

In Fig. 3 ist die Ausgangssituation eines beispielhaften Daisy-Chain-Kommunikationssystems mit fünf Teilnehmer 50, 60, 70, 80 und 90 gemäß Fig. 2 gezeigt. Die Testschalter 32 und die Adressierschalter 42 sämtlicher Teilnehmer sind geöffnet.

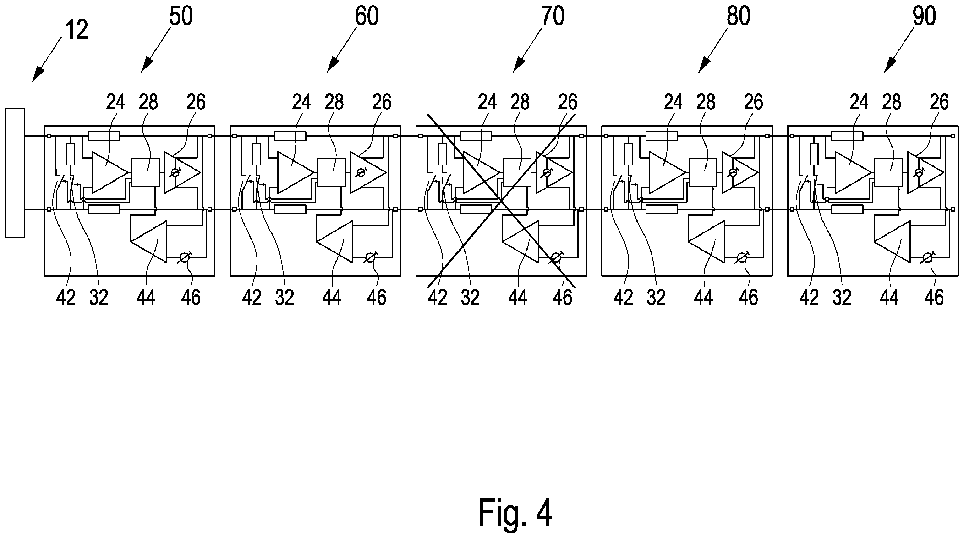

Beispielsweise beim Hochfahren des Kommunikationssystems testen sämtliche Teilnehmer sich selbst auf Funktionstüchtigkeit. In diesem Ausführungsbeispiel sei angenommen, dass der Teilnehmer 70 dabei feststellt, dass er defekt ist. Sämtliche funktionstüchtigen Teilnehmer 50, 60, 80 und 90 schließen nun ihre Testschalter 32. Der Testschalter 32 des Teilnehmers 70 bleibt offen (siehe Fig. 4).

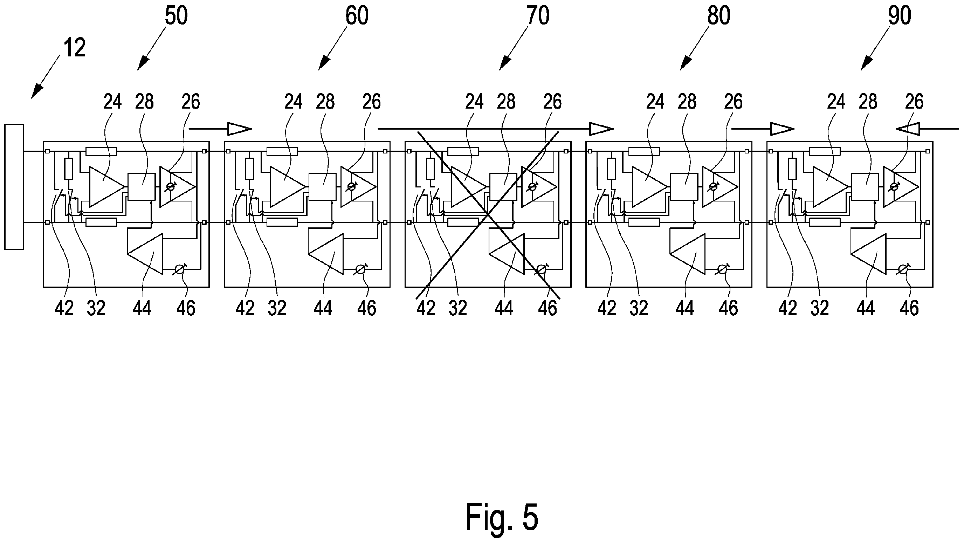

In der nächsten Phase (siehe Fig. 5) beginnt nun die automatische Adressierung der funktionstüchtigen Teilnehmer 50, 60, 80 und 90. Diese Adressierphase umfasst pro zu adressierendem Teilnehmer einen separaten Zyklus. Hierbei wird davon ausgegangen, dass die Identifikation zu adressierender Teilnehmer und die Adressierung der Teilnehmer selbst ausgehend vom am weitesten vom Busmaster 12 entfernt an den Zweidraht-Kommunikationsbus angeschlossenen Teilnehmer stromauf bis zum Busmaster 12 sämtliche zu adressierenden Teilnehmer adressiert werden (selbstverständlich mit Ausnahme der defekte Teilnehmer). Damit ergeben sich folgende Situationen der Identifikation des jeweils "letzten" noch zu adressierenden Teilnehmers:
1. Der als nächstes zu adressierende Teilnehmer ist der physikalisch letzte Teilnehmer der Reihenschaltung, an dessen Ausgang sich eine "offene" Leitung befindet, womit der detektierbare Spannungsabfall größer als eine obere Schwelle ist. Diese Situation stellt sich nur im ersten Adressierzyklus ein.
2. Der nächste zu adressierende Teilnehmer befindet sich stromauf eines im vorherigen Zyklus adressierten Teilnehmers. Dessen Adressierschalter ist geschlossen, so dass der Detektor 44 des nächsten zu adressierenden Teilnehmers am Ausgang einen Kurzschluss misst, also einen Spannungsabfall kleiner als eine untere Schwelle misst.
3. Der nächste zu adressierende Teilnehmer ist stromauf eines defekten Teilnehmers angeordnet, hinter und damit stromab dem sich der im vorherigen Zyklus adressierte Teilnehmer befindet, dessen Adressierschalter also geschlossen ist. Der nächste zu adressierende Teilnehmer misst also mittels seines Detektors 44 einen Spannungsabfall, der durch die Reihenschaltung der beiden Überbrückungswiderstände 36 des defekten Teilnehmers bestimmt ist. Der Spannungsabfall ist also größer als die untere Schwelle und kleiner als oder gleich einer mittleren Schwelle.

Pro Adressierzyklus existiert genau ein zu adressierender Teilnehmer, dessen detektierte Ausgangsspannung eines der drei zuvor genannten Kriterien erfüllt.

Jeder Adressierzyklus beginnt damit, dass der Busmaster 12 einen Strompuls (Adressierstrompuls) an den mit ihm verbundenen ersten Teilnehmer der Reihenschaltung von Teilnehmern sendet. Der erste Teilnehmer, der diesen Adressierstrompuls empfängt, erzeugt seinerseits durch seinen Sender an seinem Ausgang einen Adressierstrompuls für den nächsten Teilnehmer, um nämlich seine Position innerhalb der Reihenschaltung von Teilnehmern zu identifizieren. Letztendlich arbeitet auch der Busmaster 12 so; denn auch der Busmaster 12 nimmt an jedem Adressierzyklus teil, um letztendlich im letzten Adressierzyklus zu erkennen, dass der letzte noch zu adressierende Teilnehmer der mit dem Busmaster 12 direkt verbundene erste Teilnehmer ist (vorausgesetzt, dass dieser erste Teilnehmer nicht defekt ist).

Im ersten Adressierzyklus (siehe Fig. 5) speisen also der Busmaster 12 und sämtliche noch nicht adressierten Teilnehmer 50, 60, 80 und 90 durch ihre jeweiligen Stromquellen 37 sequentielle Adressierstrompulse in die Busleitung ein. Anhand der sich nun über den Sendern von Busmaster 12 und der zu adressierenden Teilnehmer 50, 60, 80 und 90 einstellenden Spannungsabfälle, die von den Detektoren 44 erfasst werden, erkennt die Datenverarbeitungseinheit 28 des Teilnehmers 90, dass dieser Teilnehmer der letzte der zu adressierenden Teilnehmer der Reihenschaltung ist. Der jeweilige Spannungsabfall wird mittels einer mehrere Referenzspannungen (Schwellen) vorgebenden Referenzspannungsquelle 46 verglichen. Der Detektor 44 des Teilnehmers 90 erkennt einen Spannungsabfall an seinem Ausgang, der größer ist als die obere Schwelle, da hinter diesem Teilnehmer 90 die Busleitung offen ist. Der Teilnehmer 80 erkennt mittels seines Detektors 44 an seinem Ausgang einen durch den Abschlusswiderstand 30 des letzten Teilnehmers 90 bestimmten Spannungsabfall, der kleiner ist als die vom letzten Teilnehmer 90 detektierte Spannung. Der Teilnehmer 70 nimmt, da er defekt ist, an diesem Prozedere nicht teil. Der Teilnehmer 60 erkennt über seinen Detektor 44 am Ausgang einen Spannungsabfall, der bestimmt ist durch mehrere, nämlich zwei Kaskadierungen aus zwei Überbrückungswiderständen 34 und einem Abschlusswiderstand, misst also auch eine Ausgangsspannung, die kleiner ist als im Falle des Teilnehmers 90. Eine ähnliche Situation stellt sich am Ausgang des Teilnehmers 50 ein. Auch der Busmaster 12 misst an seinem Ausgang eine Spannung, die kleiner ist als im Falle des Teilnehmers 90. Damit erfüllt einzig und allein der Teilnehmer 90 eine der oben genannten Bedingungen, die ihn als nächsten zu adressierenden Teilnehmer identifizieren. Wenn nun der Busmaster 12 ein Adresssignal mit Adressdaten auf den Bus legt, so wird dieses sukzessive von Teilnehmer zu Teilnehmer weitergegeben. Als einziger der zu adressierenden Teilnehmer nimmt der Teilnehmer 90 diese Adresse als seine an. In der Folge schließt dieser Teilnehmer 90 seinen Adressierschalter 42.

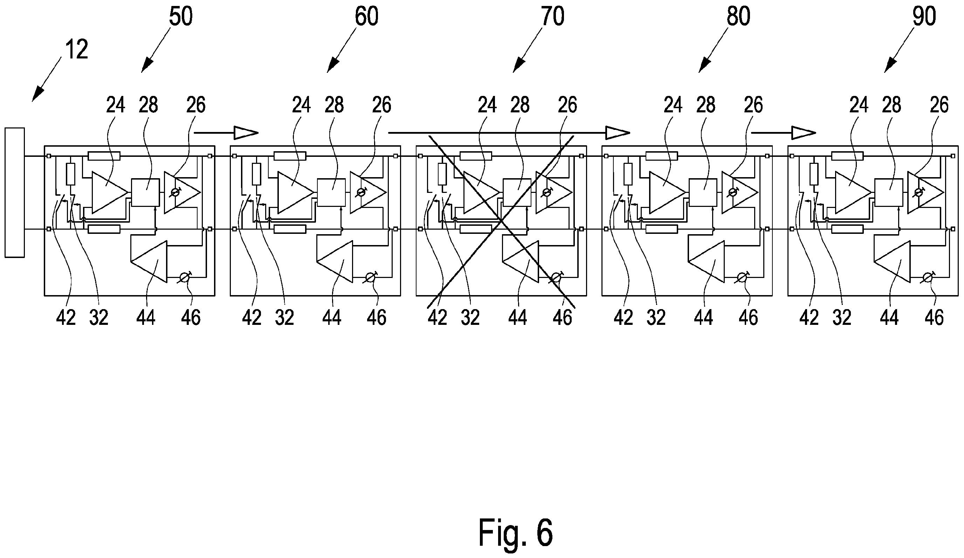

In dem nächsten Adressierzyklus (siehe Fig. 6) speisen nun die noch nicht adressierten der zu adressierenden Teilnehmer 50, 60 und 80 wiederum sequentielle Adressierstrompulse in den Bus ein. Als einziger Teilnehmer erkennt nun der Teilnehmer 80 einen Kurzschluss; sein Detektor 44 misst eine Spannung von im Wesentlichen 0 Volt, so dass dieser Teilnehmer 80 somit als nächster zu adressierender Teilnehmer identifiziert ist. Die Teilnehmer 50, 60 und 80 beenden die Adressierstromeinspeisung. Der Busmaster 12 legt wiederum ein Adressiersignal mit Adressdaten auf den Kommunikationsbus, wobei ausschließlich der Teilnehmer 80 dieses Adressiersignal und die Adressdaten als seine Adressdaten aufnimmt. Anschließend schließt der Teilnehmer 80 seinen Adressierschalter 42.

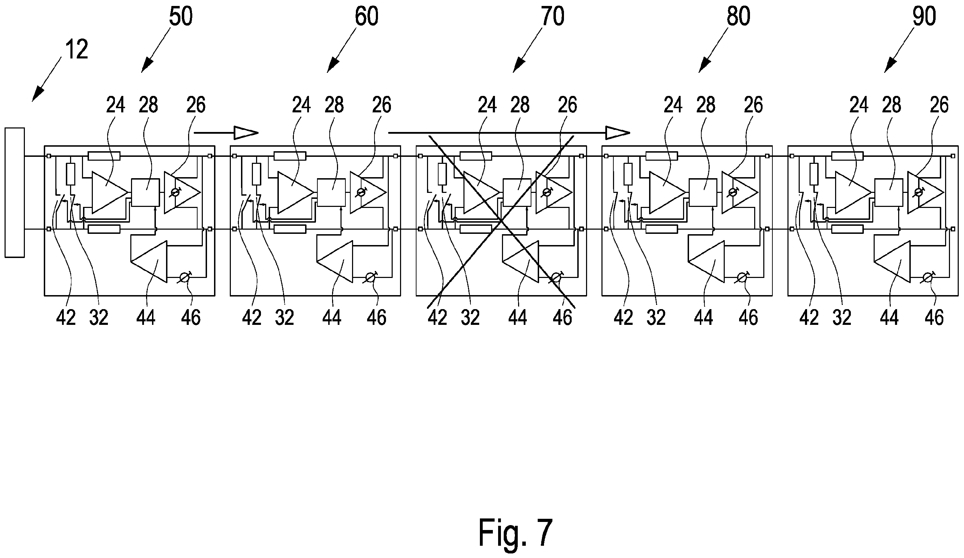

Im nächsten Adressierzyklus (siehe Fig. 7) wird nun der Teilnehmer 60 als nächster zu adressierender Teilnehmer erkannt. Die besondere Situation hierbei ist nun, dass dieser Teilnehmer 60 in der Aufeinanderfolge und Reihenschaltung von Teilnehmern vor dem defekten Teilnehmer 70 angeordnet ist. Dessen beide Schalter (Testschalter 32 und Adressierschalter 42) sind offen. Allerdings ist der Adressierschalter 42 des bereits adressierten Teilnehmers 80 hinter dem defekten Teilnehmer 70 geschlossen, so dass von den beiden zu diesem Zeitpunkt noch nicht adressierten Teilnehmern 50 und 60 es der Teilnehmer 60 ist, der den größeren Spannungsabfall über seinen Detektor 44 erfasst. Das identifiziert ihn als in diesem Adressierzyklus zu adressierenden Teilnehmer. Die beiden Teilnehmer 50 und 60 beenden ihre Adressierstromeinspeisung. Wenn nun der Busmaster 12 wiederum ein Adressiersignal mit den Adressdaten auf den Bus legt, so ist der Teilnehmer 60 derjenige, der diese Adresse als seine annimmt und abspeichert, wie es der Fall für die Adressen der zuvor adressierten Teilnehmer 80 und 90 war. Der damit adressierte Teilnehmer 60 schließt seinen Adressierschalter 42.

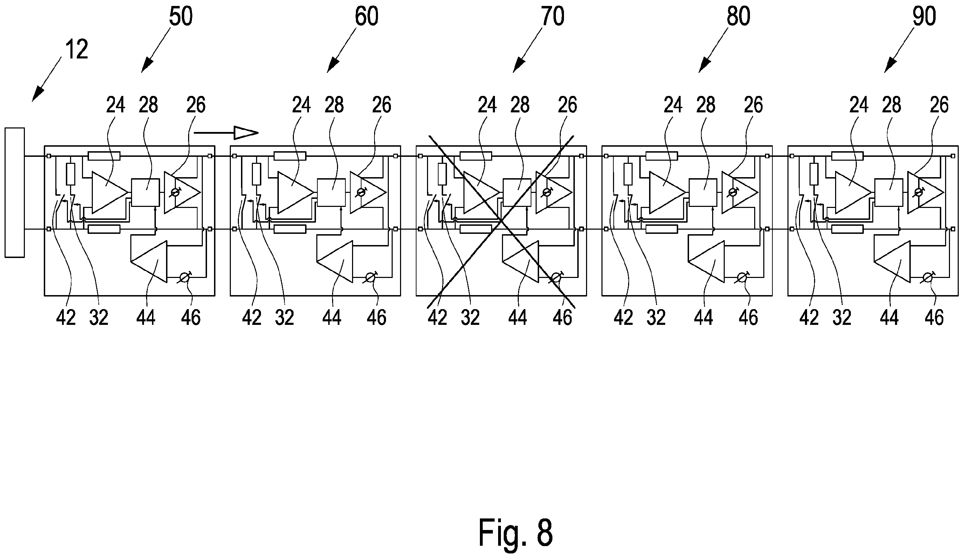

Im letzten Adressierzyklus (siehe Fig. 8) erkennt nun der Teilnehmer 50 bei der Adressierstromeinspeisung, dass sein Detektor 44 einen Spannungsabfall von im Wesentlichen 0 Volt erfasst. Damit beendet der Teilnehmer 50 nach der vorgegebenen Einspeisezeit die Adressierstromeinspeisung und nimmt die vom Busmaster 12 anschließend auf den Bus gelegten Adressdaten als seine Adresse.

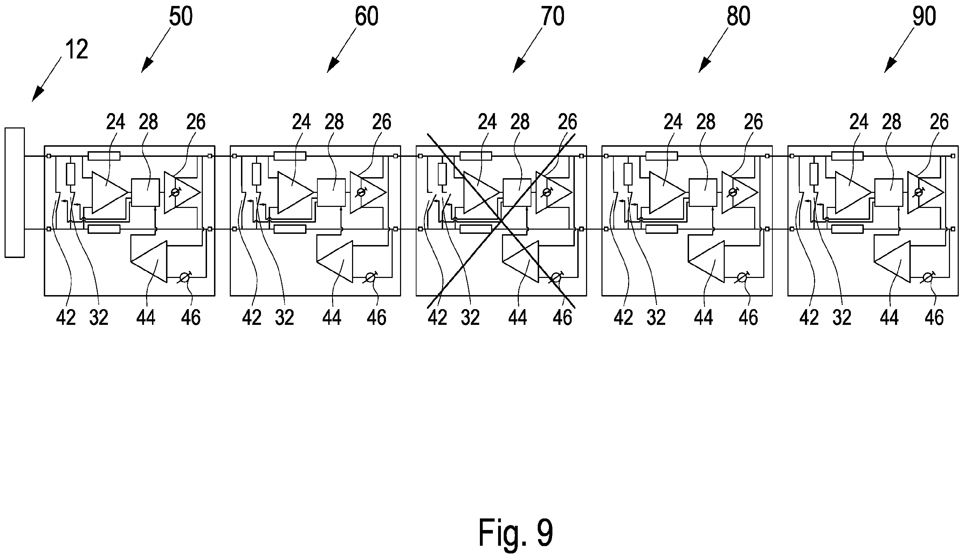

Der Busmaster 12 erkennt z.B. anhand des geschlossenen Adressierschalters 42 des Teilnehmers 50, der der nächstliegende zum Busmaster 12 ist, dass die Zweidrahtbusleitung kurzgeschlossen ist, was signalisiert, dass nun auch der letzte noch nicht adressierte Teilnehmer adressiert ist. Auf einen entsprechenden Befehl des Busmasters 12 hin öffnen dann sämtliche funktionstüchtigen und nunmehr adressierten Teilnehmer 50, 60, 80 und 90 ihre Adressierschalter 42, so dass sich die Situation gemäß Fig. 9 ergibt. Nun kann der bestimmungsgemäße und applikationsbedingte Betrieb des Kommunikationsbussystems erfolgen. Der defekte Teilnehmer 70 nimmt an dieser Kommunikation insoweit nicht teil, als er keine differenziellen Spannungssignale aufnimmt, sondern diese vielmehr über seine Überbrückungswiderstände automatisch weitergeleitet werden.

Bei dem hier beschriebenen Adressierverfahren liegt in jedem Adressvergabezyklus die Detektionsspannung genau eines der noch nicht adressierten, funktionstüchtigen Teilnehmer in einem Detektionsbereich, der den Teilnehmer als in diesem Adressvergabezyklus zu adressierenden Teilnehmer identifiziert, da dieser Teilnehmer entweder der am Ende der Reihenschaltung angeordnete Teilnehmer ist oder der letzte vor einem nicht funktionstüchtigen Teilnehmer ist oder der letzte vor einem bereits adressierten Teilnehmer ist.

### BEZUGSZEICHENLISTE

- 10: Teilnehmer
- 10': Teilnehmer
- 12: Busmaster
- 14: Zweidraht-Kommunikationsbus
- 16: erste Leitung
- 18: zweite Leitung
- 20: Zweidrahtleitungsabschnitt
- 22: Zweidrahtleitungsabschnitt
- 24: Empfänger
- 26: Sender
- 28: Datenverarbeitungseinheit
- 29: Leuchtmitteleinheit
- 30: Abschlusswiderstand
- 32: Testschalter
- 33: Eingangsanschlüsse des Empfängers
- 34: erster Überbrückungswiderstand
- 36: zweiter Überbrückungswiderstand
- 37: (Adressier-)Stromquelle
- 38: Eingangsanschluss
- 40: Eingangsanschluss
- 42: Adressierschalter
- 44: Detektor
- 45: Ausgangsanschlüsse des Senders
- 46: Referenzspannungsquelle
- 50: funktionstüchtiger Teilnehmer
- 60: funktionstüchtiger Teilnehmer
- 70: defekter Teilnehmer
- 80: funktionstüchtiger Teilnehmer
- 90: funktionstüchtiger Teilnehmer

## Patentansprüche

1. Teilnehmer für ein Kommunikationsbussystem mit einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels elektrischer differenzieller Signale, wobei die Zweidrahtleitung eine erste Leitung und eine zweite Leitung aufweist und jeder Zweidrahtleitungsabschnitt einen Abschnitt der ersten Leitung und einen Abschnitt der zweiten Leitung umfasst, mit
- einem Empfänger (24) mit zwei Eingangsanschlüssen (33), von denen jeder mit einer anderen der beiden Leitungen (16, 18) eines ersten Zweidrahtleitungsabschnitts (20) verbindbar ist,
- einem Sender (26) mit zwei Ausgangsanschlüssen (45), von denen jeder mit einem anderen der beiden Leitungen (16, 18) eines zweiten Zweidrahtleitungsabschnitts (22) verbindbar ist,
- einer Datenverarbeitungseinheit (28),
- einer mit den beiden Leitungen (16, 18) des ersten Zweidrahtleitungsabschnitts (20) verbundenen und damit parallel zu den Eingangsanschlüssen (33) des Empfängers (24) angeordneten Serienschaltung aus einem von der Datenverarbeitungseinheit (28) wahlweise in einen geschlossenen oder in einen offenen Schaltzustand überführbaren Testschalter (32) und einem Abschlusswiderstand (30),
- einem ersten Überbrückungswiderstand (34) zwischen demjenigen Eingangsanschluss (33) des Empfängers (24), der mit der ersten Leitung (16) des ersten Zweidrahtleitungsabschnitts (20) zu verbinden ist, und demjenigen Ausgangsanschluss (45) des Senders (26), der mit der ersten Leitung (16) des zweiten Zweidrahtleitungsabschnitts (22) zu verbinden ist, und
- einem zweiten Überbrückungswiderstand (36) zwischen demjenigen Eingangsanschluss (33) des Empfängers (24), der mit der zweiten Leitung (18) des ersten Zweidrahtleitungsabschnitts (20) zu verbinden ist, und demjenigen Ausgangsanschluss (45) des Senders (26), der mit der zweiten Leitung (18) des zweiten Zweidrahtleitungsabschnitts (22) zu verbinden ist.

2. Teilnehmer nach Anspruch 1, **dadurch gekennzeichnet,**
- **dass** die Datenverarbeitungseinheit (28) zur Durchführung eines Selbsttests des Teilnehmers auf Funktionstüchtigkeit ausgelegt ist und den Testschalter (32) dann, wenn die Funktion des Teilnehmers gegeben ist, in den einen Schaltzustand überführt und/oder hält, und ansonsten in den anderen Schaltzustand überführt und/oder hält, und
- **dass** ein differenzielles elektrisches Signal zwischen den beiden Leitungen (16, 18) desjenigen Zweidrahtleitungsabschnitts (20), der mit dem Empfänger (24) eines nicht funktionstüchtigen Teilnehmers verbunden ist, über die Überbrückungswiderstände (34, 36) dieses nicht funktionstüchtigen Teilnehmers zu dem Empfänger (24) desjenigen Teilnehmers weiterleitbar ist, dessen Eingang mit den beiden Leitungen (16,18) desjenigen Zweidrahtleitungsabschnitts (22) verbunden ist, an den der Sender (26) des nicht funktionstüchtigen Teilnehmers angeschlossen ist.

3. Teilnehmer nach Anspruch 2, **dadurch gekennzeichnet, dass** die Datenverarbeitungseinheit (28) den Testschalter (32) nur dann schließt, wenn die Funktionstüchtigkeit des Teilnehmers gegeben ist.

4. Verfahren zur Datenkommunikation in einem Kommunikationsbussystem, das versehen ist mit
- einer mehrere Zweidrahtleitungsabschnitte (20, 22) aufweisenden Zweidrahtleitung als differenzieller Kommunikationsbus (14) zur Verbindung mehrerer Teilnehmer (10, 10', 50, 60, 70, 80, 90) in Reihenschaltung mit einem Busmaster (12) und zur Kommunikation mittels differenzieller elektrischer Signale, wobei der Zweidraht-Kommunikationsbus (14) eine erste Leitung (16) und eine zweite Leitung (18) aufweist und jeder Zweidrahtleitungsabschnitt (20,22) einen Abschnitt der ersten Leitung (16) und Abschnitt der zweiten Leitung (18) umfasst,
und
- mehreren Teilnehmern (10, 10', 50, 60, 70, 80, 90) nach Anspruch 2 oder 3,
wobei bei dem Verfahren
- der Sender (26) eines nicht funktionstüchtigen Teilnehmers inaktiv geschaltet ist und ein solcher Sender (26) kein differenzielles elektrisches Ausgangssignal ausgibt,
- der Sender (26) des zum nicht funktionstüchtigen Teilnehmer in Richtung zum Busmaster (12) hin und damit zum in Richtung stromauf der Reihenschaltung betrachtet nächstgelegenen funktionstüchtigen Teilnehmer über die Überbrückungswiderstände (34, 36) des nicht funktionstüchtigen Teilnehmers mit dem Empfänger (24) des zum nicht funktionstüchtigen Teilnehmer in Richtung vom Busmaster (12) weg und damit zum in Richtung stromab der Reihenschaltung betrachtet nächstgelegenen funktionstüchtigen Teilnehmer oder umgekehrt kommuniziert.
